# EUROPEAN PATENT SPECIFICATION

(11) **EP 3 516 901 B1**
(45) Date of publication and mention of the grant of the patent: **17.05.2023**
(21) Application number: 17778141.6
(22) Date of filing: 22.09.2017
(51) Int. Cl.: H04W 36/00, H04W 84/12, H04W 36/28

(54) **LONG TERM EVOLUTION (LTE) HANDOVER WITH THE SAME SECONDARY LINK**
LONG-TERM-EVOLUTION (LTE)-HANDOVER MIT DERSELBEN SEKUNDÄRVERBINDUNG
TRANSFERT D'ÉVOLUTION À LONG TERME (LTE) AVEC LA MÊME LIAISON SECONDAIRE

(30) Priority: 22.09.2016 US 201662398423 P; 21.09.2017 US 201715710963
(43) Date of publication of application: 31.07.2019
(73) Proprietor: Qualcomm Incorporated, San Diego, CA 92121-1714 (US)
(72) Inventor: OZTURK, Ozcan, San Diego California 92121-1714 (US); MAHESHWARI, Shailesh, San Diego California 92121-1714 (US); MEYLAN, Arnaud, San Diego California 92121-1714 (US); XIAO, Gang Andy, San Diego California 92121-1714 (US)
(74) Representative: Dunlop, Hugh Christopher
(86) International application number: PCT/US2017/052941
(87) International publication number: WO 2018/057880

(56) References cited:
- SAMSUNG: "LTE handover during LTE-WLAN aggregation", 3GPP DRAFT; R2-156080 LTE HANDOVER DURING WLAN AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, US; 20151116 - 20151120 5 November 2015 (2015-11-05), XP051024361, Retrieved from the Internet: URL:http://www.3gpp.org/ftp/tsg_ran/WG2_RL 2/TSGR2_92/Docs/ [retrieved on 2015-11-05]
- ERICSSON: "On feedback optimization for eLWA", 3GPP DRAFT; R2-165477- ON FEEDBACK OPTIMIZATION FOR ELWA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 12 August 2016 (2016-08-12), XP051133849, Retrieved from the Internet: URL:http://www.3gpp.org/ftp/tsg_ran/WG2_RL 2/TSGR2_95/Docs/ [retrieved on 2016-08-12]
- ERICSSON: "On new PDCP status report for UE based flow control", 3GPP DRAFT; R2-161590- NEW PDCP STATUS REPORT FOR UE BASED FLOW CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Malta; 20160215 - 20160219 5 February 2016 (2016-02-05), XP051065610, Retrieved from the Internet: URL:http://www.3gpp.org/ftp/tsg_ran/WG2_RL 2/TSGR2_93/Docs/ [retrieved on 2016-02-05]
- NOKIA ET AL: "Inter-eNB HO without WT change", 3GPP DRAFT; R2-163529 ELWA_HO_ENH_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 13 May 2016 (2016-05-13), XP051095774, Retrieved from the Internet: URL:http://www.3gpp.org/ftp/tsg_ran/WG2_RL 2/TSGR2_94/Docs/ [retrieved on 2016-05-13]
- INTEL CORPORATION: "Rel 14 - Decoupling LWA PMK from KeNB Changes", 3GPP DRAFT; S3-160512-DECOUPLINGPMKFROMKENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Del Cabo, Mexico; 20160509 - 20160514 1 May 2016 (2016-05-01), XP051091703, Retrieved from the Internet: URL:http://www.3gpp.org/ftp/tsg_sa/WG3_Sec urity/TSGS3_83_Los_Cabos/Docs/ [retrieved on 2016-05-01]
- SA WG3: "Reply LS on key change during HO for eLWA", 3GPP DRAFT; R2-163323_S3-160725, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 18 May 2016 (2016-05-18), XP051112306, Retrieved from the Internet: URL:http://www.3gpp.org/ftp/tsg_ran/WG2_RL 2/TSGR2_94/Docs/ [retrieved on 2016-05-18]

## Description

### INTRODUCTION

Aspects of the present disclosure relate generally to wireless communications systems, and more particularly, to LTE handover with a same secondary link, for example, a handover in an LTE-WLAN aggregation (LWA), dual connectivity, and/or 5G scenario.

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency divisional multiple access (SC-FDMA) systems, and time division synchronous code division multiple access (TD-SCDMA) systems.

In some examples, a wireless multiple-access communication system may include a number of base stations, each simultaneously supporting communication for multiple communication devices, otherwise known as user equipment (UEs). In LTE or LTE-A network, a set of one or more base stations may define an eNodeB (eNB). In other examples (e.g., in a next generation or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., a new radio base station (NR BS), a new radio node-B (NR NB), a network node, 5G NB, gNB, gNodeB, etc.). A base station or DU may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. An example of an emerging telecommunication standard is new radio (NR), for example, 5G radio access. NR is a set of enhancements to the LTE mobile standard promulgated by Third Generation Partnership Project (3GPP). It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL) as well as support beamforming, multiple-input multiple-output (MIMO) antenna technology, and carrier aggregation.

3GPP discussion and decision document R2-156080 "LTE handover during LTE-WLAN aggregation" by Samsung discusses whether LTE handover should be supported while LTE-WLAN aggregation is configured. 3GPP discussion and decision document R2-165477 "On feedback optimization for eLWA" by Ericsson discusses possible feedback optimizations for enhanced LTE-WLAN aggregation (eLWA). 3GPP discussion and decision document R2-161590 "On new PDCP status report for UE based flow control" by Ericsson discusses proposed elements in a new PDCP status report and how useful they are for the eNB for PDCP and flow control feedback. 3GPP discussion and decision document R2-163529 "Inter-eNB HO without WT change" by Nokia, Alcatel-Lucent Shanghai Bell discusses handover enhancements and possible solutions that can be employed to enable the enhancement for eLWA.

However, as the demand for mobile broadband access continues to increase, there exists a need for further improvements in NR technology. Preferably, these improvements should be applicable to other multi-access technologies and the telecommunication standards that employ these technologies.

### SUMMARY

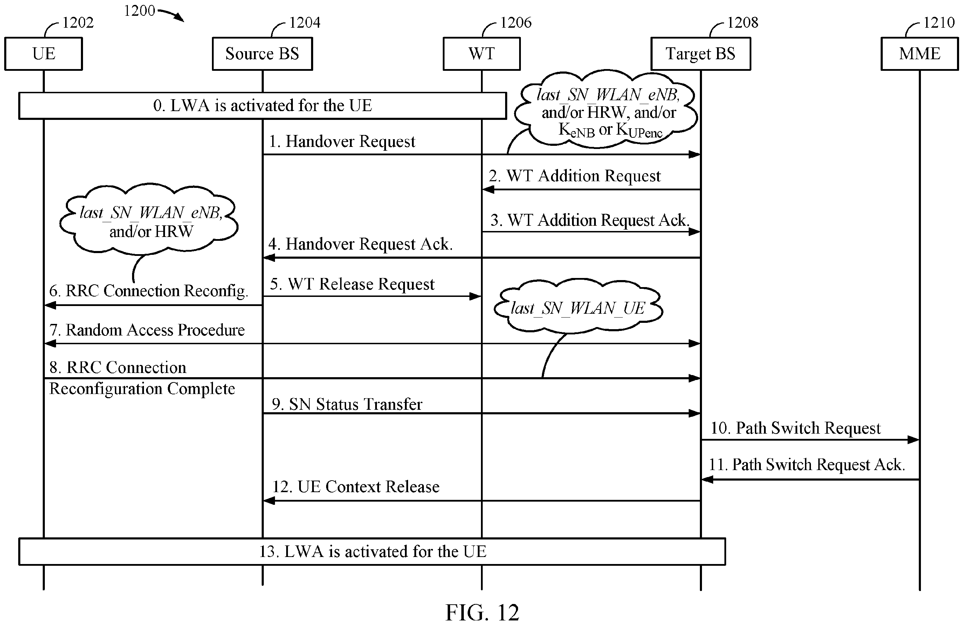

In accordance with the present invention, which is illustrated by figure 12, there is provided a method of wireless communication performed by a UE as set out in claim 1, a method of wireless communication performed by a source wide area network base station as set out in claim 7, an apparatus for a UE as set out in claim 9, and an apparatus a source wide area network base station as set out in claim 15. Other aspects of the invention can be found in the dependent claims Any embodiment referred to and not falling within the scope of the claims is merely an example useful to the understanding of the invention.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a block diagram conceptually illustrating an example telecommunications system, according to aspects of the present disclosure.
FIG. 2 is a block diagram conceptually illustrating an example downlink frame structure in a telecommunications system, according to aspects of the present disclosure.
FIG. 3 is a diagram illustrating an example uplink frame structure in a telecommunications system, according to aspects of the present disclosure.
FIG. 4 is a block diagram conceptually illustrating a design of an example Node B and user equipment (UE), according to aspects of the present disclosure.
FIG. 5 is a diagram illustrating an example radio protocol architecture for the user and control planes, according to aspects of the present disclosure.
FIG. 6 illustrates an example subframe resource element mapping, according to aspects of the present disclosure.
FIG. 7 illustrates a reference LTE-WLAN interworking architecture, in accordance with certain aspects of the present disclosure.
FIG. 8 illustrates example operations which may be performed by a UE, in accordance with aspects of the present disclosure.
FIG. 9 illustrates example operations which may be performed, for example, by a source WWAN BS, in accordance with aspects of the present disclosure.
FIG. 10 illustrates example operations which may be performed, for example, by a target WWAN BS, in accordance with aspects of the present disclosure.
FIG. 11 illustrates an example call-flow diagram, in accordance with aspects of the present disclosure.
FIG. 12 illustrates an example call-flow diagram, in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer program products for new radio (NR) (new radio access technology) cell measurement. New radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). NR may include enhanced mobile broadband (eMBB) targeting wide bandwidth (e.g. 80 MHz beyond), millimeter wave (mmW) targeting high carrier frequency (e.g. 60 GHz), massive MTC (mMTC) targeting non-backward compatible MTC techniques, and mission critical targeting ultra reliable low latency communications (URLLC). For these general topics, different techniques are considered, such as coding, low-density parity check (LDPC), and polar. NR cell may refer to a cell operating according to the new air interface or fixed transport layer. A NR Node B (e.g., 5G Node B, gNB) may correspond to one or multiple transmission reception points (TRPs).

NR cells can be configured as access cell (ACells) or data only cells (DCells). For example, the RAN (e.g., a central unit or distributed unit) can configure the cells. DCells may be cells used for carrier aggregation or dual connectivity, but not used for initial access, cell selection/reselection, or handover. In some cases DCells may not transmit synchronization signals-in some case cases DCells may transmit SS. TRPs may transmit downlink signals to UEs indicating the cell type. Based on the cell type indication, the UE may communicate with the TRP. For example, the UE may determine TRPs to consider for cell selection, access, handover, and/or measurement based on the indicated cell type.

In some cases, the UE can receive measurement configuration from the RAN. The measurement configuration information may indicate ACells or DCells for the UE to measure. The UE may monitor/detect measurement reference signals from the cells based on measurement configuration information. In some cases, the UE may blindly detect MRS. In some cases the UE may detect MRS based on MRS-IDs indicated from the RAN. The UE may report the measurement results.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting and the scope of the invention is being defined by the appended claims.

The techniques described herein may be used for various wireless communication networks such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). NR is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5G and later, including NR technologies.

### EXAMPLE WIRELESS COMMUNICATIONS SYSTEM

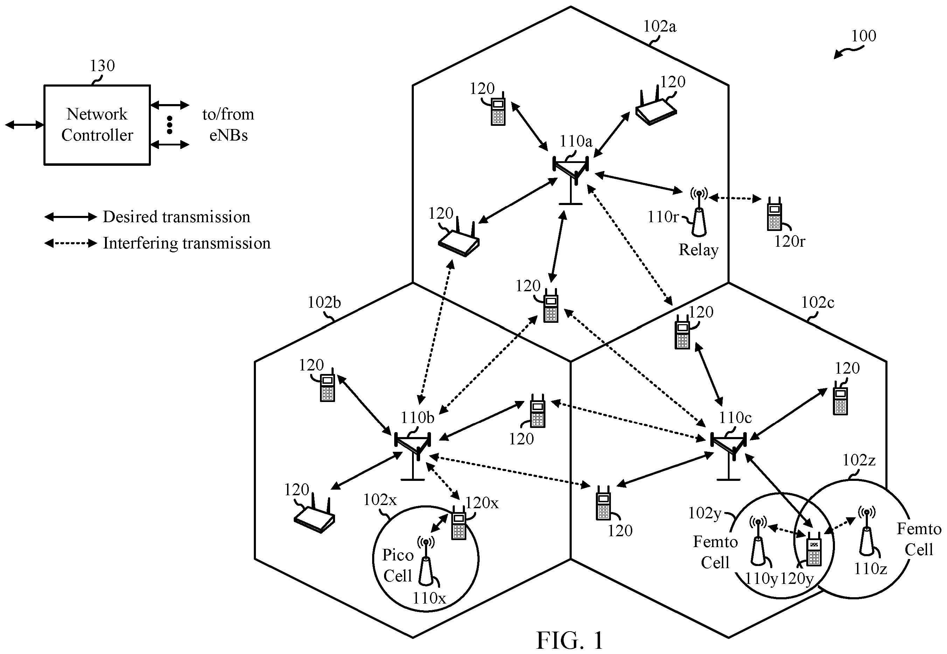

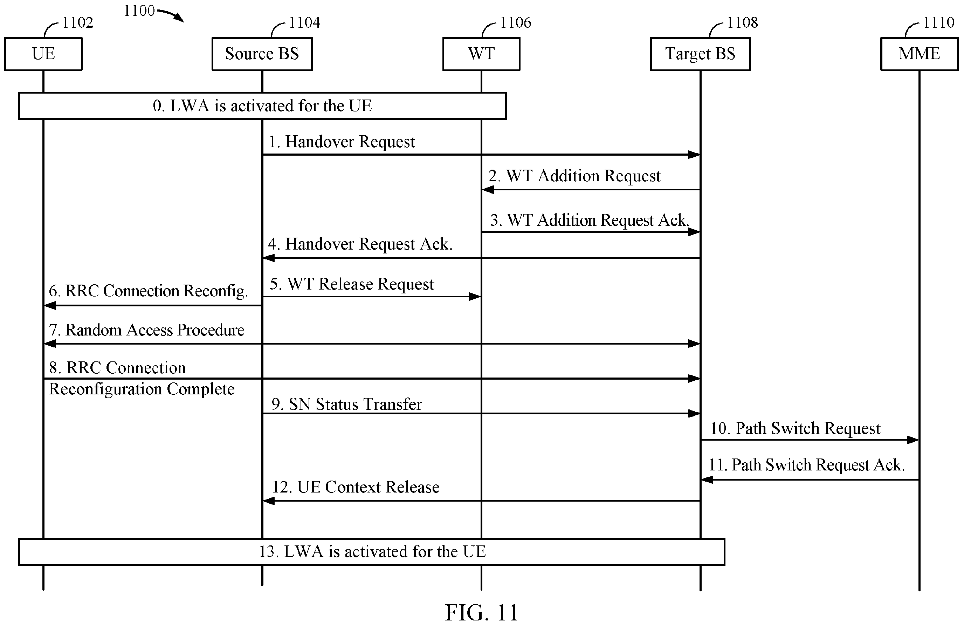

FIG. 1 illustrates an example wireless network 100 in which aspects of the present disclosure may be performed. For example, the wireless network may be new radio or 5G network. UEs 120 may be configured to perform the operations 800 and operations illustrated in FIGs. 11 and 12, discussed in more detail below for maintaining a secondary link during a handover on a primary link. A serving BS 110 may comprise a transmission reception point (TRP) and may be configured to perform the operations 900 and operations illustrated in FIGs. 11 and 12, discussed in more detail below. A target BS 110 may comprise a TRP and may be configured to perform the operations 1000 and operations illustrated in FIGs. 11 and 12, discussed in more detail below.

The system illustrated in FIG. 1 may be, for example, a long term evolution (LTE) network. The wireless network 100 may include a number of BSs (e.g., Node B, AP, evolved NodeBs (eNB), 5G Node B, TRPs, etc.) 110 and other network entities. A Node B may be a station that communicates with the UEs.

Each BS 110 may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS. In the example shown in FIG. 1, the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple (e.g., three) cells.

The wireless network 100 may also include relay stations. A relay station is a station that receives a transmission of data and/or other information from an upstream station (e.g., a BS or a UE) and sends a transmission of the data and/or other information to a downstream station (e.g., a UE or a BS). A relay station may also be a UE that relays transmissions for other UEs. In the example shown in FIG. 1, a relay station 110r may communicate with the BS 110a and a UE 120r in order to facilitate communication between the BS 110a and the UE 120r. A relay station may also be referred to as a relay BS, a relay, etc.

The wireless network 100 may be a heterogeneous network that includes BSs of different types, e.g., macro BSs, pico BSs, femto BSs, relays, transmission reception points (TRPs), etc. These different types of BSs may have different transmit power levels, different coverage areas, and different impact on interference in the wireless network 100. For example, macro BSs may have a high transmit power level (e.g., 20 Watts) whereas pico BSs, femto BSs and relays may have a lower transmit power level (e.g., 1 Watt).

The wireless network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time. The techniques described herein may be used for both synchronous and asynchronous operation.

A network controller 130 may couple to a set of BSs and provide coordination and control for these BSs. The network controller 130 may communicate with the BSs 110 via a backhaul. The BSs 110 may also communicate with one another, e.g., directly or indirectly via wireless or wireline backhaul.

The UEs 120 (e.g., 120x, 120y, etc.) may be dispersed throughout the wireless network 100, and each UE may be stationary or mobile. A UE may also be referred to as a terminal, a mobile station, a subscriber unit, a station, etc. A UE may be a cellular phone, a personal digital assistant (PDA), a wireless modem, a wireless communication device, a handheld device, a laptop computer, a cordless phone, a wireless local loop (WLL) station, a tablet, a netbook, a smart book, etc. A UE may be able to communicate with macro BSs, pico BSs, femto BSs, relays, etc. In FIG. 1, a solid line with double arrows indicates desired transmissions between a UE and a serving BS, which is a BS designated to serve the UE on the downlink and/or uplink. A dashed line with double arrows indicates interfering transmissions between a UE and a BS.

LTE utilizes orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a 'resource block') may be 12 subcarriers (or 180 kHz). Consequently, the nominal FFT size may be equal to 128, 256, 512, 1024 or 2048 for system bandwidth of 1.25, 2.5, 5, 10 or 20 megahertz (MHz), respectively. The system bandwidth may also be partitioned into subbands. For example, a subband may cover 1.08 MHz (i.e., 6 resource blocks), and there may be 1, 2, 4, 8 or 16 subbands for system bandwidth of 1.25, 2.5, 5, 10 or 20 MHz, respectively.

While aspects of the examples described herein may be associated with LTE technologies, aspects of the present disclosure may be applicable with other wireless communications systems, such as NR. NR may utilize OFDM with a CP on the uplink and downlink and include support for half-duplex operation using TDD. A single component carrier bandwidth of 100 MHZ may be supported. NR resource blocks may span 12 subcarriers with a sub-carrier bandwidth of 75 kHz over a 0.1 ms duration. Each radio frame may consist of 50 subframes with a length of 10 ms. Consequently, each subframe may have a length of 0.2 ms. Each subframe may indicate a link direction (i.e., DL or UL) for data transmission and the link direction for each subframe may be dynamically switched. Each subframe may include DL/UL data as well as DL/UL control data. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells. Alternatively, NR may support a different air interface, other than an OFDM-based. NR networks may include entities such central units or distributed units.

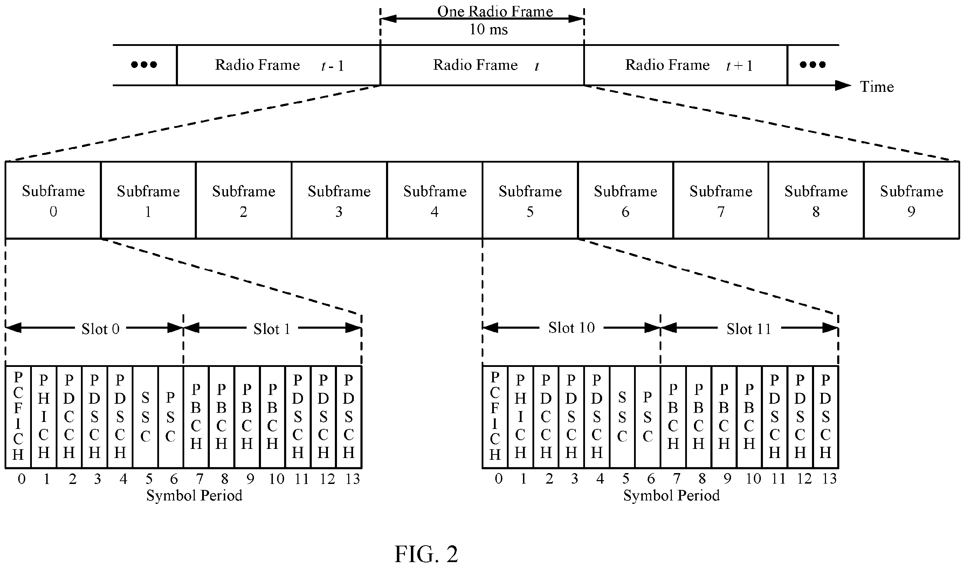

FIG. 2 shows a down link (DL) frame structure used in a telecommunication systems (e.g., LTE). The transmission timeline for the downlink may be partitioned into units of radio frames. Each radio frame may have a predetermined duration (e.g., 10 milliseconds (ms)) and may be partitioned into 10 sub-frames with indices of 0 through 9. Each sub-frame may include two slots. Each radio frame may thus include 20 slots with indices of 0 through 19. Each slot may include L symbol periods, e.g., 7 symbol periods for a normal cyclic prefix (as shown in FIG. 2) or 14 symbol periods for an extended cyclic prefix. The 2L symbol periods in each sub-frame may be assigned indices of 0 through 2L-1. The available time frequency resources may be partitioned into resource blocks. Each resource block may cover N subcarriers (e.g., 12 subcarriers) in one slot.

In LTE, a BS may send a primary synchronization signal (PSS) and a secondary synchronization signal (SSS) for each cell in the BS. The primary and secondary synchronization signals may be sent in symbol periods 6 and 5, respectively, in each of sub-frames 0 and 5 of each radio frame with the normal cyclic prefix, as shown in FIG. 2. The synchronization signals may be used by UEs for cell detection and acquisition. The BS may send a Physical Broadcast Channel (PBCH) in symbol periods 0 to 3 in slot 1 of sub-frame 0. The PBCH may carry certain system information.

The BS may send a Physical Control Format Indicator Channel (PCFICH) in only a portion of the first symbol period of each sub-frame, although depicted in the entire first symbol period in FIG. 2. The PCFICH may convey the number of symbol periods (M) used for control channels, where M may be equal to 1, 2 or 3 and may change from sub-frame to sub-frame. M may also be equal to 4 for a small system bandwidth, e.g., with less than 10 resource blocks. In the example shown in FIG. 2, M=3. The BS may send a Physical HARQ Indicator Channel (PHICH) and a Physical Downlink Control Channel (PDCCH) in the first M symbol periods of each sub-frame (M=3 in FIG. 2). The PHICH may carry information to support hybrid automatic retransmission (HARQ). The PDCCH may carry information on uplink and downlink resource allocation for UEs and power control information for uplink channels. Although not shown in the first symbol period in FIG. 2, it is understood that the PDCCH and PHICH are also included in the first symbol period. Similarly, the PHICH and PDCCH are also both in the second and third symbol periods, although not shown that way in FIG. 2. The BS may send a Physical Downlink Shared Channel (PDSCH) in the remaining symbol periods of each sub-frame. The PDSCH may carry data for UEs scheduled for data transmission on the downlink. The various signals and channels in LTE are described in 3GPP TS 36.211, entitled "Evolved Universal Terrestrial Radio Access (E-UTRA); Physical Channels and Modulation," which is publicly available.

The BS may send the PSS, SSS and PBCH in the center 1.08 MHz of the system bandwidth used by the BS. The BS may send the PCFICH and PHICH across the entire system bandwidth in each symbol period in which these channels are sent. The BS may send the PDCCH to groups of UEs in certain portions of the system bandwidth. The BS may send the PDSCH to specific UEs in specific portions of the system bandwidth. The BS may send the PSS, SSS, PBCH, PCFICH and PHICH in a broadcast manner to all UEs, may send the PDCCH in a unicast manner to specific UEs, and may also send the PDSCH in a unicast manner to specific UEs.

A number of resource elements may be available in each symbol period. Each resource element may cover one subcarrier in one symbol period and may be used to send one modulation symbol, which may be a real or complex value. Resource elements not used for a reference signal in each symbol period may be arranged into resource element groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1 and 2. The PDCCH may occupy 9, 18, 32 or 64 REGs, which may be selected from the available REGs, in the first M symbol periods. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. A BS may send the PDCCH to the UE in any of the combinations that the UE will search.

A UE may be within the coverage of multiple BSs. One of these BSs may be selected to serve the UE. The serving BS may be selected based on various criteria such as received power, path loss, signal-to-noise ratio (SNR), etc.

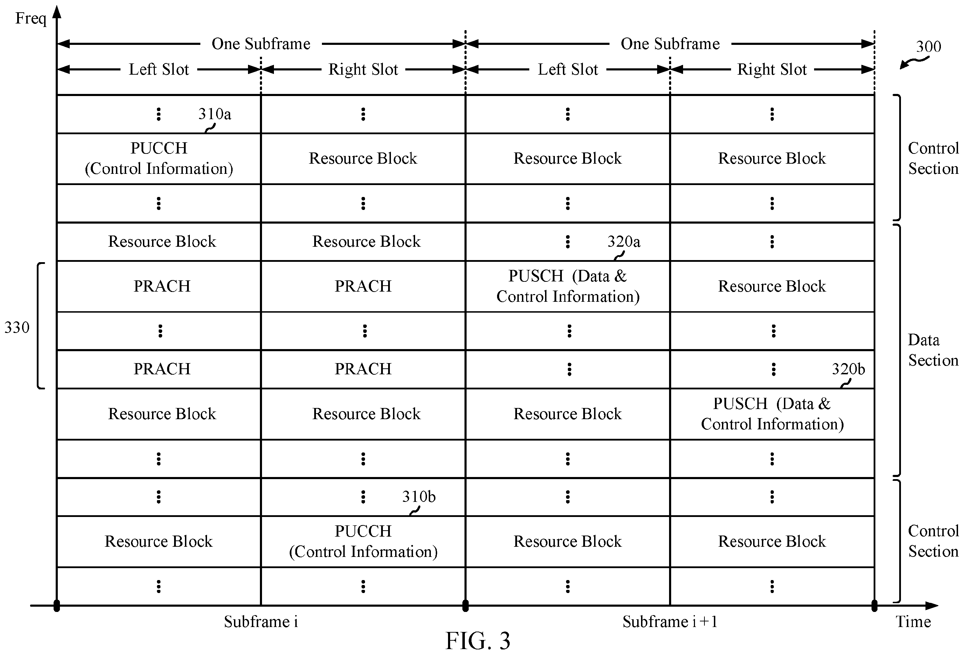

FIG. 3 is a diagram 300 illustrating an example of an uplink (UL) frame structure in a telecommunications system (e.g., LTE). The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 310a, 310b in the control section to transmit control information to a BS. The UE may also be assigned resource blocks 320a, 320b in the data section to transmit data to the BS. The UE may transmit control information in a physical UL control channel (PUCCH) on the assigned resource blocks in the control section. The UE may transmit only data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 330. The PRACH 330 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make only a single PRACH attempt per frame (10 ms).

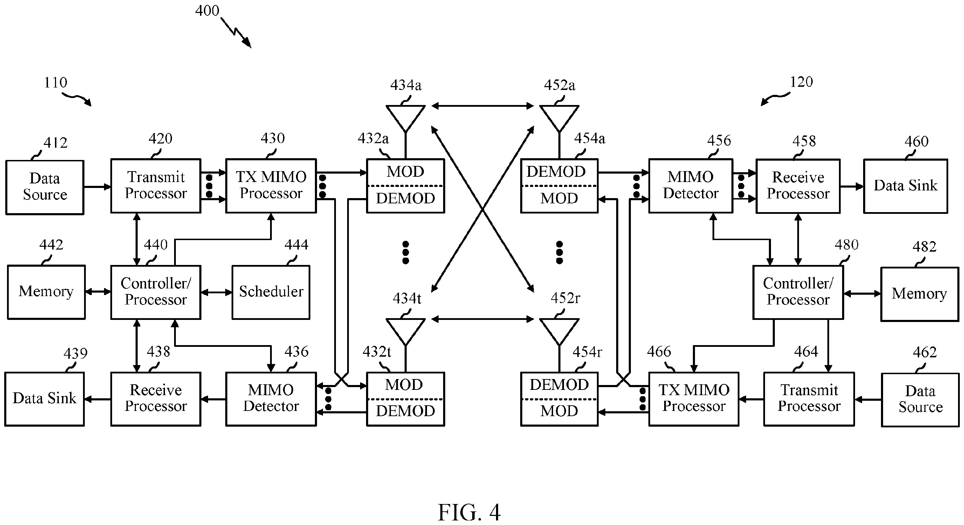

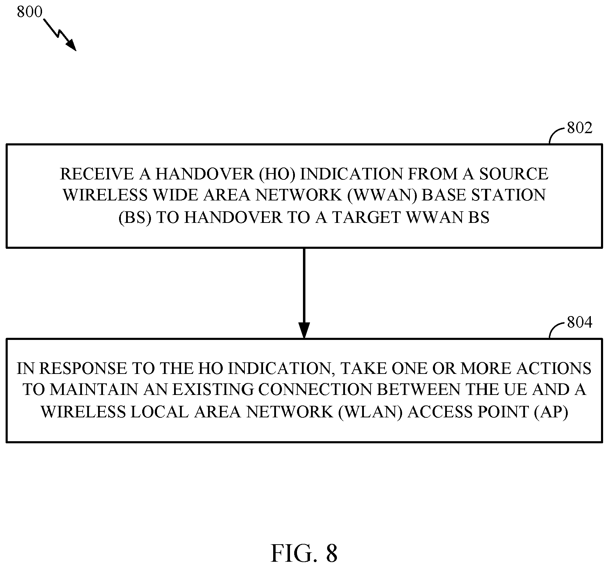

FIG. 4 illustrates example components of the base station 110 and UE 120 illustrated in FIG. 1, which may be used to implement aspects of the present disclosure. One or more components of the BS 110 and UE 120 may be used to practice aspects of the present disclosure. For example, antennas 452, mod/demod 454, processors 458, 464, 466 and/or controller/processor 480 of the UE 120 and/or antennas 434, mod/demod 432, processors 420, 430, 438, and/or controller/processor 440 of the BS 110 may be used to perform the operations described herein and illustrated with reference to FIGs. 8-12. The BS 110 may be a serving BS. A target BS may include similar components as shown at 110.

FIG. 4 shows a block diagram of a design of a base station/Node B 110 and a UE 120, which may be one of the base stations/Node Bs and one of the UEs in FIG. 1. For a restricted association scenario, the base station 110 may be the macro BS 110c in FIG. 1, and the UE 120 may be the UE 120y. The base station 110 may also be a base station of some other type. The base station 110 may be equipped with antennas 434a through 434t, and the UE 120 may be equipped with antennas 452a through 452r.

At the base station 110, a transmit processor 420 may receive data from a data source 412 and control information from a controller/processor 440. The control information may be for the PBCH, PCFICH, PHICH, PDCCH, etc. The data may be for the PDSCH, etc. The processor 420 may process (e.g., encode and symbol map) the data and control information to obtain data symbols and control symbols, respectively. The processor 420 may also generate reference symbols, e.g., for the PSS, SSS, and cell-specific reference signal. A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. Each modulator 432 may process a respective output symbol stream (e.g., for OFDM, etc.) to obtain an output sample stream. Each modulator 432 may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, the antennas 452a through 452r may receive the downlink signals from the base station 110 and may provide received signals to the demodulators (DEMODs) 454a through 454r, respectively. Each demodulator 454 may condition (e.g., filter, amplify, downconvert, and digitize) a respective received signal to obtain input samples. Each demodulator 454 may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. A receive processor 458 may process (e.g., demodulate, deinterleave, and decode) the detected symbols, provide decoded data for the UE 120 to a data sink 460, and provide decoded control information to a controller/processor 480.

On the uplink, at the UE 120, a transmit processor 464 may receive and process data (e.g., for the PUSCH) from a data source 462 and control information (e.g., for the PUCCH) from the controller/processor 480. The transmit processor 464 may also generate reference symbols for a reference signal. The symbols from the transmit processor 464 may be precoded by a TX MIMO processor 466 if applicable, further processed by the demodulators 454a through 454r (e.g., for SC-FDM, etc.), and transmitted to the base station 110. At the base station 110, the uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

The controllers/processors 440 and 480 may direct the operation at the base station 110 and the UE 120, respectively. The processor 440 and/or other processors and modules at the base station 110 may perform or direct, e.g., the execution of various processes for the techniques described herein. The processor 480 and/or other processors and modules at the UE 120 may also perform or direct, e.g., the execution of the functional blocks and/or operations illustrated in FIGs. 8-12, and/or other processes for the techniques described herein. The memories 442 and 482 may store data and program codes for the base station 110 and the UE 120, respectively. A scheduler 444 may schedule UEs for data transmission on the downlink and/or uplink.

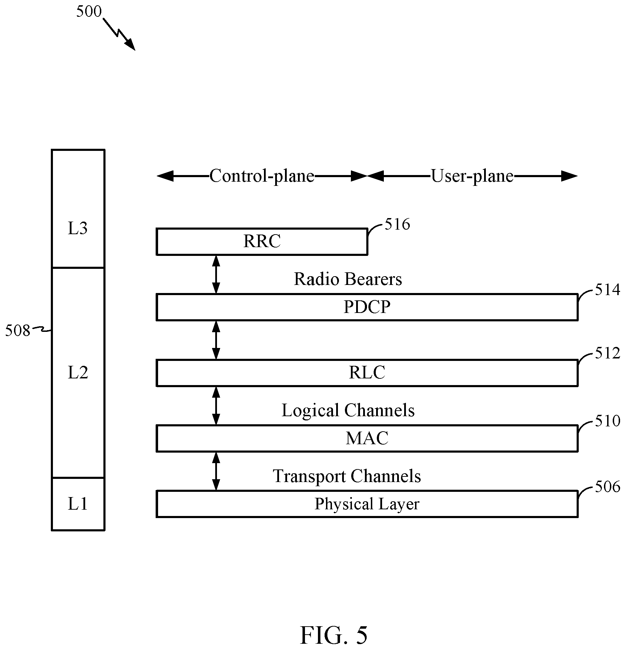

FIG. 5 is a diagram 500 illustrating an example of a radio protocol architecture for the user and control planes in LTE. The radio protocol architecture for the UE and the BS is shown with three layers: Layer 1, Layer 2, and Layer 3. Layer 1 (L1 layer) is the lowest layer and implements various physical layer signal processing functions. The L1 layer will be referred to herein as the physical layer 506. Layer 2 (L2 layer) 508 is above the physical layer 506 and is responsible for the link between the UE and BS over the physical layer 506.

In the user plane, the L2 layer 508 includes a media access control (MAC) sublayer 510, a radio link control (RLC) sublayer 512, and a packet data convergence protocol (PDCP) 514 sublayer, which are terminated at the Node B on the network side. Although not shown, the UE may have several upper layers above the L2 layer 508 including a network layer (e.g., IP layer) that is terminated at the PDN gateway 118 on the network side, and an application layer that is terminated at the other end of the connection (e.g., far end UE, server, etc.).

The PDCP sublayer 514 provides multiplexing between different radio bearers and logical channels. The PDCP sublayer 514 also provides header compression for upper layer data packets to reduce radio transmission overhead, security by ciphering the data packets, and handover support for UEs between BSs. The RLC sublayer 512 provides segmentation and reassembly of upper layer data packets, retransmission of lost data packets, and reordering of data packets to compensate for out-of-order reception due to hybrid automatic repeat request (HARQ). The MAC sublayer 510 provides multiplexing between logical and transport channels. The MAC sublayer 510 is also responsible for allocating the various radio resources (e.g., resource blocks) in one cell among the UEs. The MAC sublayer 510 is also responsible for HARQ operations.

In the control plane, the radio protocol architecture for the UE and BS is substantially the same for the physical layer 506 and the L2 layer 508 with the exception that there is no header compression function for the control plane. The control plane also includes a radio resource control (RRC) sublayer 516 in Layer 3 (L3 layer). The RRC sublayer 516 is responsible for obtaining radio resources (i.e., radio bearers) and for configuring the lower layers using RRC signaling between the BS and the UE.

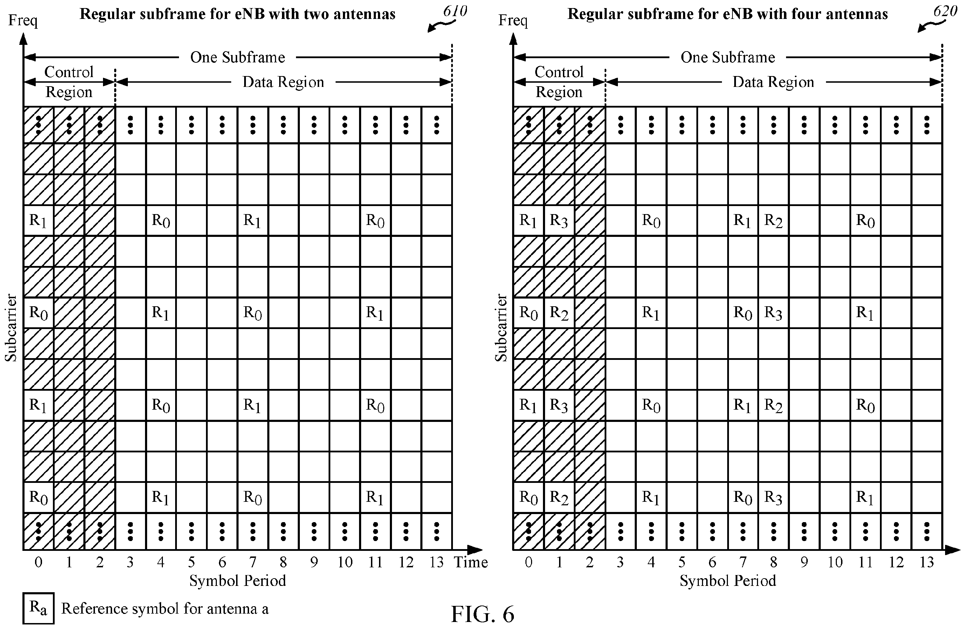

FIG. 6 shows two exemplary subframe formats 610 and 620 for the downlink with the normal cyclic prefix. The available time frequency resources for the downlink may be partitioned into resource blocks. Each resource block may cover 12 subcarriers in one slot and may include a number of resource elements. Each resource element may cover one subcarrier in one symbol period and may be used to send one modulation symbol, which may be a real or complex value.

Subframe format 610 may be used for a BS equipped with two antennas. A CRS may be transmitted from antennas 0 and 1 in symbol periods 0, 4, 7 and 11. A reference signal is a signal that is known *a priori* by a transmitter and a receiver and may also be referred to as a pilot. A CRS is a reference signal that is specific for a cell, e.g., generated based on a cell identity (ID). In FIG. 6, for a given resource element with label Rₐ, a modulation symbol may be transmitted on that resource element from antenna a, and no modulation symbols may be transmitted on that resource element from other antennas. Subframe format 620 may be used for a BS equipped with four antennas. A CRS may be transmitted from antennas 0 and 1 in symbol periods 0, 4, 7 and 11 and from antennas 2 and 3 in symbol periods 1 and 8. For both subframe formats 610 and 620, a CRS may be transmitted on evenly spaced subcarriers, which may be determined based on cell ID. Different BSs may transmit their CRSs on the same or different subcarriers, depending on their cell IDs. For both subframe formats 610 and 620, resource elements not used for the CRS may be used to transmit data (e.g., traffic data, control data, and/or other data).

The PSS, SSS, CRS and PBCH in LTE are described in 3GPP TS 36.211, entitled "Evolved Universal Terrestrial Radio Access (E-UTRA); Physical Channels and Modulation," which is publicly available.

An interlace structure may be used for each of the downlink and uplink for FDD in LTE. For example, Q interlaces with indices of 0 through Q-1 may be defined, where Q may be equal to 4, 6, 8, 10, or some other value. Each interlace may include subframes that are spaced apart by Q frames. In particular, interlace q may include subframes q, q + Q, q + 2Q, etc., where q ∈ {0,..., Q-1}.

The wireless network may support hybrid automatic retransmission (HARQ) for data transmission on the downlink and uplink. For HARQ, a transmitter (e.g., a BS) may send one or more transmissions of a packet until the packet is decoded correctly by a receiver (e.g., a UE) or some other termination condition is encountered. For synchronous HARQ, all transmissions of the packet may be sent in subframes of a single interlace. For asynchronous HARQ, each transmission of the packet may be sent in any subframe.

A UE may be located within the coverage area of multiple BSs. One of these BSs may be selected to serve the UE. The serving BS may be selected based on various criteria such as received signal strength, received signal quality, pathloss, etc. Received signal quality may be quantified by a signal-to-noise-and-interference ratio (SINR), or a reference signal received quality (RSRQ), or some other metric. The UE may operate in a dominant interference scenario in which the UE may observe high interference from one or more interfering BS.

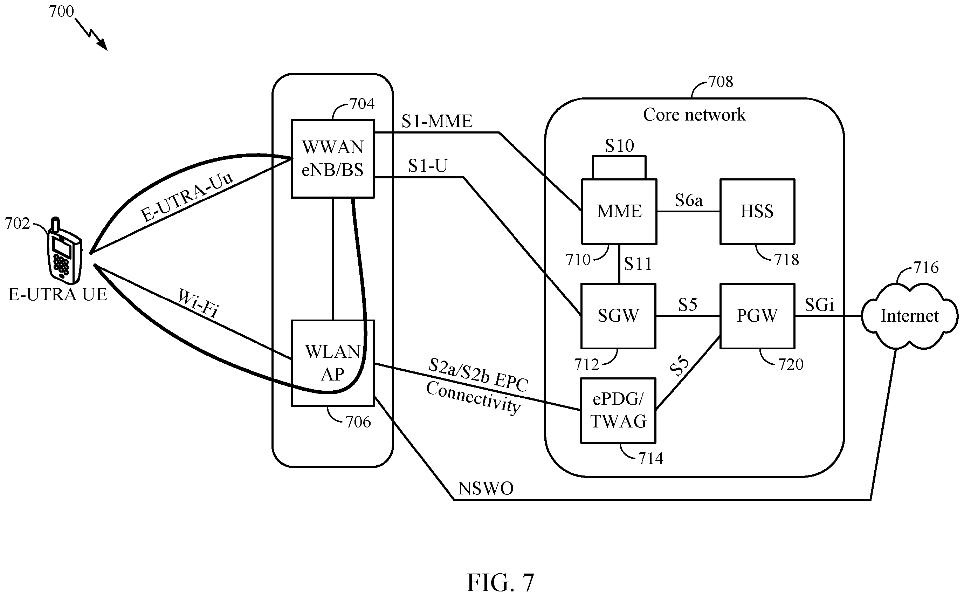

FIG. 7 illustrates a reference architecture 700 for a multi-mode UE may establishing and maintaining connections with one or more of networks including a wireless wide area network (WWAN) (e.g., an LTE network) and a wireless local area network (WLAN) (e.g., a Wi-Fi network). Such a system may also support radio access network (RAN) aggregation (i.e., LTE+Wi-Fi aggregation or "LWA"). LWA may refer to LTE managing WLAN connectivity. LWA may follow dual connectivity architecture, which allows a UE to connect to multiple BSs simultaneously, with WLAN used instead of LTE Secondary eNB (SeNB). The UE 702 may be a UE 120 illustrated in FIG. 1, which may include one or more components illustrated in FIG. 4.

As shown in FIG. 7, the UE 702 may be served by a collocated eNB 704 (e.g., via a WWAN) and WLAN AP 706 (e.g., via a Wi-Fi network) which are in communication with a core network 708. While FIG. 7 shows an eNB, the eNB of the wide-area network may be a UTRAN NodeB, E-UTRAN eNodeB, an access point, 5G Node B, a BS, or any other radio node supporting a wide-area wireless network. Similarly, the BS of the local-area network may be a low-power E-UTRAN eNodeB such as a femto node, a WLAN AP, or any other radio node supporting a local-area wireless network.

As shown in FIG. 7, the eNB 704 may communicate with a mobility management entity (MME) 710 in the core network 708 via an S1-MME interface, and the eNB 704 may communicate with a serving gateway (SGW) 712 of the core network 708 via an S1-U interface. The WLAN AP 706 may communicate with an evolved packet data gateway (ePDG) 714 or trusted wireless access gateway (TWAG) 714 in the core network 708 via an S2a interface and/or an S2b interface. The WLAN AP 706 may also communicate directly with Internet entities 716 to provide non-seamless WLAN offload (NSWO) of IP traffic between the UE 702 and the Internet entities 716. NSWO may be used to support routing specific IP flows over the WLAN access network without traversing the EPC. Also, inside an EPC is an entity called the access network discovery and selection function (ANDSF) which assists the UE to discover non-3GPP access networks, such as Wi-Fi, that may be used for controlling offloading between 3GPP access networks (such as LTE) and non-3GPP access networks (such as Wi-Fi). The ANDSF may also provide the UE with rules policing the connection to these networks. The MME 710 may communicate with a home subscriber server (HSS) 718 via an S6a interface, and the MME may communicate with the SGW 712 via an S11 interface. The SGW, ePDG, and TWAG may communicate with a packet gateway (PGW) 720 via an S5 interface. The PGW 720 may communicate with Internet entities 716 via an SGi interface.

According to certain aspects, with RAN aggregation (e.g., LWA) a UE may be simultaneously connected to an LTE eNB and a Wi-Fi (i.e., Wi-Fi AP), which provides radio access links to transport a user's signaling and data traffic, as shown in FIG. 7. While FIG. 7 illustrates a collocated eNB and AP, the eNB and the AP may be logically collocated or non-collocated. In a non-collocated scenario, an interface between the LTE eNB and Wi-Fi AP may enable aggregation procedures. A user's data or signaling bearers may be served by either LTE or Wi-Fi radio links. A data bearer establishes a "virtual" connection between two endpoints so that traffic can be sent between them. It acts as a pipeline between the two endpoints.

FIG. 7 illustrates an example of a LWA scenario; however, the UE 702 may additionally or alternatively operate in a dual-connected mode with connections to a master BS and a secondary BS. The master BS and secondary BS may comprise BSs of the same or different networks. As described herein, the UE may handover one link while maintaining a connection on another (e.g., the secondary) link.

### EXAMPLE NEW RADIO CELL MEASUREMENT

New radio (NR) may refer to radios configured to operate according a wireless standard, such as 5G (e.g. wireless network 100). NR may include enhanced mobile broadband (eMBB) targeting wide bandwidth (e.g. 80 MHz beyond), millimeter wave (mmW) targeting high carrier frequency (e.g. 60 GHz), massive MTC (mMTC) targeting non-backward compatible MTC techniques, and mission critical targeting ultra reliable low latency communications (URLLC).

NR cell may refer to a cell operating according in the NR network. A NR BS (e.g., Node B 110) may correspond to one or multiple transmission reception points (TRPs). As used herein, a cell may refer to a combination of downlink (and potentially also uplink) resources. The linking between the carrier frequency of the downlink resources and the carrier frequency of the uplink resources is indicated in the system information (SI) transmitted on the downlink resources. For example, system information can be transmitted in a physical broadcast channel (PBCH) carrying a master information block (MIB).

NR RAN architecture may include a central unit (CU) (e.g., central unit 140). The CU may be an Access node controller (ANC). The CU terminates backhaul interface to RAN-CN, terminates backhaul interface to neighbor RAN node. The RAN may include a Distributed unit that may be one or more TRPs that may be connected to one or more ANCs (not shown). TRPs may advertise System Information (e.g., Global TRP ID), may include PDCP/RLC/MAC functions, may comprise one or more antenna ports, may be configured to individually (dynamic selection) or jointly (joint transmission), and may serve traffic to the UE.

### LTE HANDOVER WITH SAME SECONDARY LINK

A UE may establish and maintain connections with one or more networks including a wireless wide area network (WWAN) (e.g., an LTE network) and a wireless local area network (WLAN) (e.g., a Wi-Fi network). A WWAN BS may support radio access network (RAN) aggregation (i.e., LTE+Wi-Fi aggregation or "LWA"). LWA may refer to LTE managing WLAN connectivity. LWA is an interworking between LTE and WLAN including data aggregation at the radio access network. In LWA, a WWAN BS may schedule packets to be served on LTE and Wi-Fi radio links. According to aspects, "aggregation" or "radio aggregation" may refer to LWA.

LWA, introduced in 3GPP Release 13, is being enhanced in Release-14 as "enhanced LWA" (eLWA). In Release 13, when an LTE handover (HO) occurs for a UE served by a BS managing WLAN connectivity, the data transmission on WLAN is interrupted. Data transmission on the WLAN may be interrupted because the UE has to reassociate with WLAN after the HO on LTE.

In Release-14, the UE may keep the same WLAN AP during LTE HO. However, interruption for data transmission on WLAN may still occur on the DL since the connection to the PDCP layer is re-established at the UE during LTE HO. A similar problem may exist on uplink through WLAN as well since data packets may need to be forwarded from the target BS (instead of the source BS) to the WLAN AP after the LTE HO.

In LTE, four access stratum (AS) keys include K_{eNB}, K_{RRCint}, K_{RRCenc}, and K_{UPenc}. The AS keys may change upon handover and connection re-establishment. For handover from a source BS to a target BS, the UE and the source BS may derive the K_{eNB} used at the target BS. The K_{eNB} is specific for one session of an UE at one BS and is used as the root key for the AS security, i.e. the security between the UE and the BS. The K_{eNB} may be used to derive keys used for ciphering data to be transmitted or deciphering received data.

The other AS keys, K_{RRCint}, K_{RRCenc}, and K_{UPenc}, may be derived from the K_{eNB} used at the target BS. K_{RRCint} is a key which may be used for the protection of RRC traffic with a particular integrity algorithm. K_{RRCint} may be derived by the UE and the BS from the K_{eNB} and an identifier for an integrity algorithm. K_{RRCenc} is a key which may be used for the protection of RRC traffic with a particular encryption algorithm. K_{RRCenc} may be derived by the UE and the BS from the K_{eNB} as well as an identifier for the encryption algorithm. K_{UPenc} is a key which may be used for the protection of UL traffic with a particular encryption algorithm. The key may be derived by the UE and the BS from the K_{eNB} as well as an identifier for the encryption algorithm.

The K_{eNB} may change upon handover and connection re-establishment. When the UE receives the new K_{eNB} in the handover command, the UE may apply the new K_{eNB} and may also reset the MAC layer connection and re-establish PDCP connection.

Aspects of the present disclosure provide methods to minimize interruption for UL and/or DL transmission via a secondary link during a handover on a primary link (e.g., an LTE HO). For example, a BS serving a UE may manage WLAN connections. As another example, the UE may be dual connected to a master and secondary BS. Aspects provide techniques to allow a UE to continue to receive and/or transmit via the secondary link during handover on the primary link.

For example, a WWAN BS serving the UE may be managing the UE's WLAN connectivity. Aspects of the present disclosure describe how a wireless device may cipher PDCP PDUs to be transmitted and decipher PDCP PDUs received over WLAN during LTE HO. Aspects also describe when and how a logical node called a WLAN Termination (WT) may change the forwarding of uplink PDUs to the WLAN from source BS to a target BS. In accordance with aspects described herein, a UE may advantageously experience minimized disruption on a second link during handover on a primary link.

In the aggregation architecture, a WLAN AP may be similar to the secondary BS (Secondary eNB, SeNB) in the user plane. A new interface between the BS and WLAN, called Xw, may be defined having a functionality similar to the Xn interface between the MeNB and SeNB in a dual connectivity scenario. The Xw interface may also include some functionality for WLAN interworking. According to Release-13, in an LWA architecture, an BS may be connected to a WT over an Xw interface. This interface may have both a control plane and user plane and may be similar to an X2 interface. The termination point of Xw at WLAN is a WT logical node. WT may be implemented at an access point, access controller, or another physical entity.

FIG. 8 illustrates example operations 800 which is performed by a user equipment, in accordance with aspects described herein. The UE may be dual connected UE or may be served by a WWAN BS managing WLAN connectivity. According to aspects, the UE is handed over from a source WWAN BS to target WWAN BS on a first link and while maintaining a same secondary link during the WWAN handover on the primary link. The operations 800 may be performed by one or more modules of a UE 120 as illustrated in FIG. 4. The UE may be, for example, UE 120 or UE 702 as illustrated in FIGs. 1, 4, and 7.

At 802, the UE receives a handover (HO) indication from a source wireless wide area network (WWAN) base station (BS) to handover to a target WWAN BS. At 804, the UE takes one or more actions to maintain an existing connection between the UE and a wireless local area network (WLAN) access point (AP).

For illustrative purposes, aspects are described with reference to a UE having a connection to a WWAN and a WLAN; however, as described above, the UE may be a dual connected UE with connections to a master and secondary BS. According to aspects, the UE may also be connected to a 5G network on a primary or secondary link. The UE may handover on a primary link, while maintaining a connection on a secondary link, thereby minimizing disruption on the secondary link.

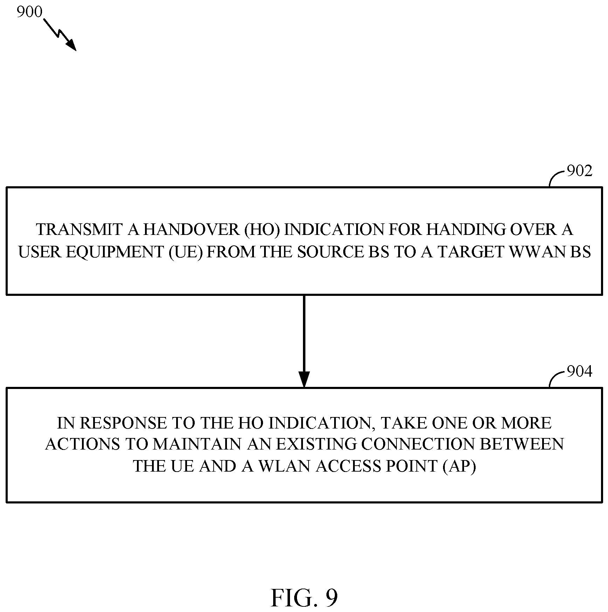

FIG. 9 illustrates example operations 900 which is performed by a source BS, in accordance with aspects described herein. The operations 900 may be performed by one or more modules of a BS 110 as illustrated in FIG. 4. The UE may be, for example, BS 110 or BS 704 as illustrated in FIGs. 1, 4, and 7.

At 902, the source BS transmits a handover (HO) indication for handing over a user equipment (UE) from the source BS to a target WWAN BS. At 904, the source BS takes one or more actions to maintain an existing connection between the UE and a WLAN access point (AP).

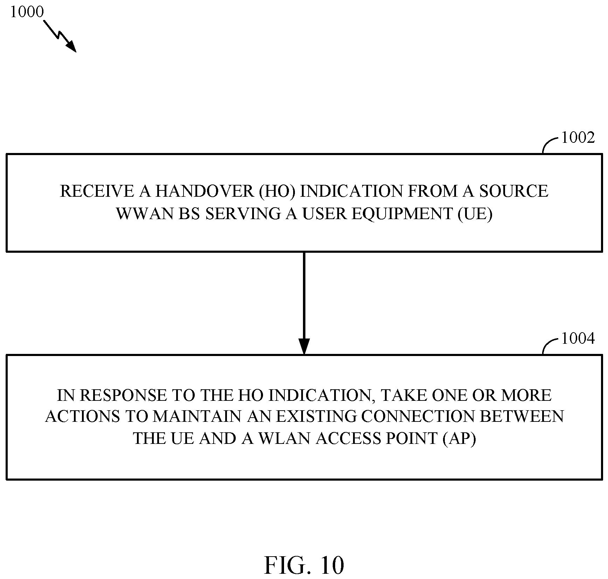

FIG. 10 illustrates example operations 1000 which may be performed by a target BS, in accordance with aspects described herein. The operations 1000 may be performed by one or more modules of a BS 110 as illustrated in FIG. 4. The BS may be, for example, BS 110 as illustrated in FIGs. 4. With reference to FIG. 7, after the handover, the target WLAN BS may be serving the UE, and therefore, may be BS 704.

At 1002, the target receives a handover (HO) indication from a source WWAN BS serving a user equipment (UE). At 1004, the target BS takes one or more actions to maintain an existing connection between the UE and a WLAN access point (AP). The existing connection that is maintained as described in FIGs. 8-10 may be a secondary link between the UE and the WLAN AP.

FIG. 11 illustrates an example call-flow 1100 diagram, in accordance with aspects of the present disclosure. The call-flow diagram 1100 may relate to an eLWA LTE HO. As illustrated, communication between a UE 1102, source BS 1104, WT 1106, target BS 1108, and MME 1110 are illustrated. As described above, the WT may be a logical node that may be implemented at a physical entity such as an access point or access controller.

At step 0, LWA may be activated for the UE using the WT and source BS. The source BS may perform measurements and decide to handover the UE to the target BS 1108. At step 1, the source BS transmits a HO request to the target BS. At step 2, the target BS may request addition of the WT. At step 3, the WT may acknowledge the received addition request. Thereafter, at step 4, the target BS may transmit a HO request acknowledgement. After the link between the WT and target BS is set up, at step 5, the source BS may request releasing the connection to the WT.

At step 6, the source BS may transmit, to the UE, an RRC connection reconfiguration message. At step 7, the UE and the target BS may perform a random access procedure. At step 8, the UE may transmit, to the target BS, an RRC connection reconfiguration complete message.

At step 9, the source BS transmits a sequence number (SN) status to the target BS. At step 10, the target BS may transmit a path switch request to the MME. At step 11, the MME may transmit a path switch request acknowledgement. At step 12, the target BS may transmit a UE context release to the source BS. At step 13, LWA may be activated for the UE using the WT and the target BS.

FIG. 12 illustrates an example call-flow diagram 1200, according to aspects of the present disclosure. Similar to FIG. 11, the call-flow diagram 1200 may relate to an eLWA LTE HO. As illustrated, communication between a UE 1202, source BS 1204, WT 1206, target BS 1208, and MME 1210 are illustrated.

In accordance with the claims, the steps illustrated in FIG. 12 are similar to the corresponding steps illustrated in FIG. 11. Accordingly, the description of these steps is omitted in the following paragraphs.

According to aspects, at step 1, the source BS transits a handover request to the target BS. In handover request signals the last SN associated with a DL PDCP PDU which was transmitted (e.g., forwarded) to the WLAN AP. The last SN transmitted to the WLAN may be referred to as the *last_SN_WLAN_eNB.*

According to the invention, the source BS also signals, to the UE, the last SN associated with a DL PDCP PDU transmitted (e.g., forwarded) to the WLAN. The source BS signals the *last_SN_WLAN_eNB* to the UE in step 6, as illustrated in FIG. 12.

According to aspects the source BS may also signal, to the target BS, the highest received SN of the PDU on WLAN, called HRW. The source BS may signal the HRW at step 1, as illustrated in FIG. 12. Similarly, the source BS may signal the HRW to the UE, for example, at step 6, as illustrated in FIG. 12. According to aspects, the HRW may be transmitted to the target BS in a LWA status report.

The UE and the target BS take one or more actions to maintain an existing connection between the UE and the WT based, at least in part, on a SN associated with a last PDCP PDU forwarded by the source BS to the WLAN or a highest received SN on WLAN (HRW). According to the invention, the source BS transmit, to the UE, an indication of the highest received SN associated with the last PDCP PDU forwarded by the source BS to the WLAN or a highest received SN on WLAN (HRW).

The UE uses a ciphering key associated with the source BS for deciphering PDUs received having a SN less than a last PDU forwarded to the AP by the source BS. The UE uses a ciphering key associated with the target BS for ciphering packets for UL transmission after the handover to the target BS is complete

The target BS takes one or more actions in an effort to maintain a UE's connection to the WT based on the SN of the last PDU forwarded to the AP by the source BS. According to aspects, the target BS may only forward PDUs on WLAN having a SN that is greater than the last PDU forwarded to the AP by the source BS.

The target BS may optionally transmit (via LTE) to the UE, PDUs with SN less than *last_SN_WLAN_eNB.* This may be enabled if WLAN does not continue transmission after the change of Xw from the source BS to the target BS. Such behavior may be signalled on Xw interface.

The source BS may forward unciphered PDCP PDUs, for which delivery has not been confirmed by WLAN, to target eNB. In other words, the source BS may determine one or more PDCP PDUs have not been forwarded to the WLAN AP. In response, the source BS may forward the unciphered PDCP PDUs to the target BS. According to aspects, the Xw change from source to target BS for the WT may occur before the HO request acknowledgment. For example, with reference to FIGs 11 or 12, the change from the source BS to the target BS may occur as a result of steps 2 and 3, which may occur before the target BS transmits the HO request acknowledgment at step 4.

For UL transmission, the UE may signal, to the target BS, the SN associated with a last transmitted UL PDU over WLAN, which may be referred to as the *last_SN_WLAN_UE.* As shown in FIG. 12, this information may be transmitted at step 8, in the RRC connection reconfiguration complete message.

At times, the target BS may determine that it is missing one or more UL PDCP PDUs based on the *last_SN_WLAN_UE.* The target BS may determine that is missing PDUs when a PDU received from the WLAN has an SN that is less than *last_SN_WLAN_UE.* Three options may exist for the target BS to handle PDCP PDUs received from WLAN with SN less than *last_SN_WLAN_UE.*

According to a first option, the target BS may transmit a PDCP status report indicating missing PDUs. The target BS may transmit this report to the UE. In response, the UE may retransmit missing PDUs using a ciphering key associated with the target BS. The target BS may discard PDUs received from the WLAN with a SN less than the last transmitted PDU over WLAN.

According to a second option, the UE may retransmit, to the source BS or to the AP, PDUs having a SN less than the last transmitted PDU over WLAN and greater than the highest received SN of a PDU on WLAN (e.g., *last_SN_WLAN_UE* > SN > HRW). The target BS may discard PDUs received from WLAN with SN less than *last_SN_WLAN_UE.* The target BS may transmit, to the AP, PDUs with SNs greater than the SN associated with the last PDU forwarded to the AP by the source BS.

According to a third option, the target BS may decipher PDUs having a SN less than the *last_SN_WLAN_UE* with a key associated with the source BS. To facilitate the target BS's use of the source BS's key, the source BS may signal its K_{eNB} or K_{UPenc} to the target BS in HO Request, at step 1 (see FIG. 12).

According to aspects, during HO on the primary link, both the UE and the target BS may use the ciphering key associated with the source BS for data transmitted over WLAN. The target BS may switch from using the key associated with the source BS to using a key associated with the target BS after the handover. As described above, the source BS may signal its K_{eNB} or K_{UPenc} to the target BS in HO Request, at step 1.

According to aspects, instead of using a ciphering key associated with the source BS until the HO is complete, the target BS and UE may use a permanent ciphering key associated with the WLAN AP for data transmitted over WLAN. The permanent key may be a separate key used only for data transmission over WLAN. For example, the permanent key may be used before, during, and after the HO on the primary link.

According to aspects, the UE may transmit a ciphering key in a WLAN PDU itself. For example, bits in the header of the WLAN PDU may indicate the ciphering key that is to be used by the target BS. Accordingly, the target BS may receive the WLAN PDU, determine the ciphering key, and use the determined the ciphering key to decipher the WLAN PDU. According to aspects, the target BS may similarly include an indication of a ciphering key in a WLAN PDU to be used by a UE to decipher the received WLAN PDUs.

According to aspects, a "dummy packet" may be used to indicate how to cipher and decipher packets on the secondary link. A UE may receive a dummy packet (dummy PDU) from the source BS, which may indicate the last SN of a PDU forwarded by the source BS to the AP. The UE may decipher subsequently received packets using a ciphering key associated with the target BS.

According to aspects, the UE may transmit a dummy packet to the target BS. The dummy packet may indicate the SN of the last PDU ciphered and transmitted using a ciphering key associated with the source BS. After transmitting the dummy packet, the UE may transmit WLAN PDUs using a ciphering key associated with the target BS.

Thus, the dummy packet transmitted by the source BS to the UE may indicate a DL switch in ciphering keys and the dummy packet transmitted by the UE to the target BS may indicate an UL switch in ciphering keys.

As described herein, aspects of the present disclosure provide techniques to minimize interruption for UL and/or DL transmission via a secondary link during a handover on a primary link.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. The operations may include, for example, instructions for receiving a handover (HO) indication from a source wireless wide area network (WWAN) base station (BS) to handover to a target WWAN BS, and in response to the HO indication, taking one or more actions to maintain an existing connection between the UE and a wireless local area network (WLAN) access point (AP). As another example, the operations may include transmitting a handover (HO) indication for handing over a user equipment (UE) from the source BS to a target WWAN BS, and in response to the HO indication, taking one or more actions to maintain an existing connection between the UE and a WLAN access point (AP). As another example, the operations may include receiving a handover (HO) indication from a source WWAN BS serving a user equipment (UE), and in response to the HO indication, taking one or more actions to maintain an existing connection between the UE and a WLAN access point (AP).

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

**WHAT IS CLAIMED IS:**

## Claims

1. A method of wireless communication performed by a user equipment, UE, (1202), the method comprising:
receiving (1002) a handover, HO, indication from a source wireless wide area network, WWAN, base station, BS, (1204) to handover to a target WWAN BS (1208); and
in response to the HO indication, taking (1004) one or more actions to maintain an existing connection between the UE (1202) and a wireless local area network, WLAN access point, AP, (1206), the method **characterized by** further comprising:
receiving, from the source BS (1204), a sequence number, SN, associated with a last packet data convergence protocol, PDCP, physical data unit, PDU, forwarded to the AP (1206) by the source BS (1204), and in that taking the one or more actions comprises
using a deciphering key associated with the source BS (1204) for deciphering PDUs received having a SN less than the SN of the last PDU forwarded to the AP (1206) by the source BS (1204).

2. The method of claim 1, wherein taking the one or more actions comprises:
using a ciphering key associated with the target BS for ciphering packets for UL transmission after the HO to the target BS is complete.

3. The method of claim 1, wherein the SN associated with the last PDCP PDU is received in a radio resource control, RRC, connection reconfiguration message.

4. The method of claim 1, further comprising:
transmitting a SN associated with a last transmitted UL PDU over WLAN to the target BS.

5. The method of claim 1, wherein the UE is connected to the WLAN via a BS managing WLAN aggregation.

6. The method of claim 1, further comprising:
prior to receiving and processing the HO indication, using a ciphering key associated with the source BS for transmitting and receiving WLAN packet data units, PDUs.

7. A method of wireless communication performed by a source wireless wide area network, WWAN, base station, BS, (1204), the method comprising:
transmitting (902) a handover, HO, request for handing over a user equipment, UE, from the source BS (1204) to a target WWAN BS (1208); and
in response to receiving an acknowledgement of the HO request from the target WWAN BS, taking (904) one or more actions to maintain an existing connection between the UE (1202) and a WLAN access point, AP, (1206), the method **characterized in that** taking the one or more actions comprises:
transmitting, to the UE (1202), a sequence number, SN, associated with a last packet data convergence protocol, PDCP, physical data unit, PDU, forwarded to the AP (1206) by the source BS (1204).

8. The method of claim 7, wherein the source BS manages the UE's connection to the WLAN.

9. An apparatus for a user equipment, UE, (1202), to perform wireless communication, the apparatus comprising:
at least one processor configured to cause the UE to:
receive (1002) a handover, HO, indication from a source wireless wide area network, WWAN, base station, BS, (1204) to handover to a target WWAN BS (1208); and
in response to the HO indication, take (1004) one or more actions to maintain an existing connection between the UE (1204) and a wireless local area network, WLAN, access point, AP, (1206); and
a memory coupled to the at least one processor, the apparatus **characterized in that** the at least one processor is configured to cause the UE to:
receive, from the source BS (1204), a sequence number, SN, associated with a last packet data convergence protocol, PDCP, physical data unit, PDU, forwarded PDUs to the AP (1206) by the source BS (1204); and
use a deciphering key associated with the source BS (1204) for deciphering PDUs received having a SN less than the SN of the last PDU forwarded to the AP (1206) by the source BS (1204).

10. The apparatus of claim 9, wherein the at least one processor configured cause the UE to take the one or more actions is configured to cause the UE to use a ciphering key associated with the target BS for UL WLAN transmission.

11. The apparatus of claim 9, wherein the at least one processor configured cause the UE to take the one or more actions is configured to cause the UE to use, during the HO, a ciphering key associated with the source BS for data transmitted over WLAN.

12. The apparatus of claim 9, wherein the at least one processor configured cause the UE to take the one or more actions is configured to cause the UE to:
transmit a physical data unit, PDU, to the target BS, wherein the PDU indicates last ciphered PDU transmitted using a key associated with the source BS; and
after the at least one processor transmits the PDU to the target BS, the at least one processor is configured to transmit WLAN PDUs using a ciphering key associated with the target BS.

13. The apparatus of claim 9, wherein the UE is connected to the WLAN via a BS managing WLAN aggregation.

14. The apparatus of claim 9, wherein the at least one processor is configured to cause the UE to:
prior to receiving and processing the HO indication, use a ciphering key associated with the source BS for transmitting and receiving WLAN packet data units, PDUs.

15. An apparatus for a source wireless wide area network, WWAN, base station, BS, (1204), to perform wireless communication, the apparatus comprising:
at least one processor configured to cause the BS to:
transmit (902) a handover, HO, request for handing over a user equipment, UE, (1202) from the source BS (1204) to a target WWAN BS (1208); and
in response to receiving an acknowledgement of the HO request from the target WWAN BS, take (904) one or more actions to maintain an existing connection between the UE (1202) and a WLAN access point, AP (1206); and
a memory coupled to the at least one processor, the apparatus **characterized in that** the at least one processor is configured to cause the BS to transmit a PDU to the UE (1202), a sequence number, SN, associated with a last packet data convergence protocol, PDCP, physical data unit, PDU, forwarded to the AP (1206) by the source BS (1204).

## Patentansprüche

1. Ein Verfahren für Drahtloskommunikation, das durch eine Nutzereinrichtung bzw. UE (UE = user equipment) (1202) durchgeführt wird, wobei das Verfahren Folgendes aufweist:
Empfangen (1002) einer Übergabe- bzw. HO-Anzeige (HO = handover) von einer Ursprungsdrahtlosweitverkehrsnetzwerkbasisstation bzw. Ursprungs-WWAN-BS (WWAN = wireless wide area network, BS = base station) (1204) zu einer Ziel-WWAN-BS (1208); und
ansprechend auf die HO-Anzeige, Ergreifen (1004) von einer oder mehreren Maßnahmen zum Aufrechterhalten einer existierenden Verbindung zwischen der UE (1202) und einem Drahtloslokalnetzwerkzugriffspunkt bzw. WLAN-AP (WLAN = wireless local area network, AP = access point) (1206), wobei das Verfahren **dadurch gekennzeichnet ist, dass** es weiter Folgendes aufweist:
Empfangen, von der Ursprungs-BS (1204), einer Sequenznummer bzw. SN (SN = sequence number), die mit einer letzten physischen Dateneinheit eines Paketdatenkonvergenzprotokolls bzw. PDCP-PDU (PDCP = packet data convergence protocol, PDU = physical data unit) assoziiert ist, die an den AP (1206) durch die Ursprungs-BS (1204) weitergeleitet wird, und dadurch, dass die eine oder die mehreren Maßnahmen Folgendes aufweisen Nutzen eines Entschlüsselungsschlüssels, der mit der Ursprungs-BS (1204) assoziiert ist zum Entschlüsseln von empfangenen PDUs, die eine SN haben, die kleiner ist als die SN der letzten PDU, die an den AP (1206) durch die Ursprungs-BS (1204) weitergeleitet worden ist.

2. Verfahren nach Anspruch 1, wobei das Ergreifen der einen oder mehreren Maßnahmen Folgendes aufweist:
Nutzen eines Verschlüsselungsschlüssels, der mit der Ziel-BS assoziiert ist zum Verschlüsseln von Paketen zur UL-Sendung, nachdem der HO an die Ziel-BS abgeschlossen ist.

3. Verfahren nach Anspruch 1, wobei die SN, die mit der letzten PDCP-PDU assoziiert ist, in einer Funkressourcensteuerungs- bzw. RRC-Verbindungsrekonfigurationsnachricht empfangen wird.

4. Verfahren nach Anspruch 1, das weiter Folgendes aufweist:
Senden einer SN, die mit einer letzten gesendeten UL-PDU assoziiert ist über WLAN an den Ziel-BS.

5. Verfahren nach Anspruch 1, wobei die UE mit dem WLAN über eine BS-Managing-WLAN-Aggregation verbunden ist.

6. Verfahren nach Anspruch 1, das weiter Folgendes aufweist:
vor Empfangen und Verarbeiten der HO-Anzeige, Nutzen eines Verschlüsselungsschlüssels, der mit der Ursprungs-BS assoziiert ist zum Senden und Empfangen von WLAN-Paketdateneinheiten bzw. PDUs.

7. Ein Verfahren für Drahtloskommunikation, das durch eine Ursprungsweitverkehrsnetzwerkbasisstation bzw. Ursprungs-WWAN-BS (1204) durchgeführt wird, wobei das Verfahren Folgendes aufweist:
Senden (902) einer Übergabe- bzw. HO-Anfrage (HO = handover) zum Übergeben einer Nutzereinrichtung bzw. UE (UE = user equipment) von der Ursprungs-BS (1204) an eine Ziel-WWAN-BS (1208); und
ansprechend auf Empfangen einer Bestätigung der HO-Anfrage von der Ziel-WWAN-BS, Ergreifen (904) von einer oder mehreren Maßnahmen zum Aufrechterhalten einer existierenden Verbindung zwischen der UE (1202) und einem WLAN-Zugriffspunkt bzw. WLAN-AP (AP = access point) (1206), wobei das Verfahren **dadurch gekennzeichnet ist, dass** die eine oder die mehreren Maßnahmen Folgendes aufweisen:
Senden, an die UE (1202) einer Sequenznummer bzw. SN (SN = sequence number), die mit einer letzten physischen Dateneinheit eines Paketdatenkonvergenzprotokolls bzw. PDCP-PDU (PDCP = packet data convergence protocol, PDU = physical data unit) assoziiert ist, die an den AP (1206) durch die Ursprungs-BS (1204) weitergeleitet wird.

8. Verfahren nach Anspruch 7, wobei die Ursprungs-BS die Verbindung der UE mit dem WLAN managt bzw. verwaltet.

9. Eine Vorrichtung für eine Nutzereinrichtung bzw. UE (UE = user equipment) (1202) zum Durchführen von Drahtloskommunikation, wobei die Vorrichtung Folgendes aufweist:
wenigstens einen Prozessor, der konfiguriert ist die UE zu veranlassen zum: Empfangen (1002) einer Übergabe- bzw. HO-Anzeige (HO = handover) von einer Ursprungsdrahtlosweitverkehrsnetzwerkbasisstation bzw. Ursprungs-WWAN-BS (WWAN = wireless wide area network, BS = base station((1204) zu einer Ziel-WWAN-BS (1208); und
ansprechend auf die HO-Anzeige, Ergreifen (1004) von einer oder mehreren Maßnahmen zum Aufrechterhalten einer existierenden Verbindung zwischen der UE (1204) und einem Drahtloslokalnetzwerkzugriffspunkt bzw. WLAN-AP (WLAN = wireless local area network, AP = access point) (1206), und
einen Speicher, der an den wenigstens einen Prozessor gekoppelt ist, wobei die Vorrichtung **dadurch gekennzeichnet ist, dass** der wenigstens eine Prozessor konfiguriert ist die UE zu veranlassen zum:
Empfangen, von der Ursprungs-BS (1204), einer Sequenznummer bzw. SN (SN = sequence number), die mit einer letzten physischen Dateneinheit eines Paketdatenkonvergenzprotokolls bzw. PDCP-PDU (PDCP = packet data convergence protocol, PDU = physical data unit) assoziiert ist, und zwar von an den AP (1206) durch die Ursprungs-BS (1204) weitergeleiteten PDUs, und
Nutzen eines Entschlüsselungsschlüssels, der mit der Ursprungs-BS (1204) assoziiert ist zum Entschlüsseln von empfangenen PDUs, die eine SN haben, die kleiner ist als die SN der letzten PDU, die an den AP (1206) durch die Ursprungs-BS (1204) weitergeleitet worden ist.

10. Vorrichtung nach Anspruch 9, wobei der wenigstens eine Prozessor, der konfiguriert ist die UE zu veranlassen eine oder mehrere Maßnahmen zu ergreifen, konfiguriert ist die UE zu veranlassen einen Verschlüsselungsschlüssel zu nutzen, der mit der Ziel-BS für UL-WLAN-Sendung assoziiert ist.

11. Vorrichtung nach Anspruch 9, wobei der wenigstens eine Prozessor, der konfiguriert ist die UE zu veranlassen eine oder mehrere Maßnahmen zu ergreifen, konfiguriert ist die UE zu veranlassen, während des HO, einen Verschlüsselungsschlüssel zu nutzen, der mit der Ursprungs-BS für Daten, die über WLAN gesendet worden sind, assoziiert ist.

12. Vorrichtung nach Anspruch 9, wobei der wenigstens eine Prozessor, der konfiguriert ist die UE zu veranlassen eine oder mehrere Maßnahmen zu ergreifen, konfiguriert ist die UE zu veranlassen zum:
Senden einer physischen Dateneinheit bzw. PDU (PDU = physical data unit) an die Ziel-BS, wobei die PDU eine letzte verschlüsselte PDU anzeigt, die unter Nutzung eines Schlüssels gesendet worden ist, der mit der Ursprungs-BS assoziiert ist; und
nachdem der wenigstens eine Prozessor die PDU an die Ziel-BS sendet, der wenigstens eine Prozessor konfiguriert ist zum Senden von WLAN-PDUs unter Nutzung eines Verschlüsselungsschlüssels, der mit der Ziel-BS assoziiert ist.

13. Vorrichtung nach Anspruch 9, wobei die UE mit dem WLAN über eine BS-Managing-WLAN-Aggregation verbunden ist.

14. Vorrichtung nach Anspruch 9, wobei der wenigstens eine Prozessor konfiguriert ist die UE zu veranlassen zum:
vor Empfangen und Verarbeiten der HO-Anzeige, Nutzen eines Verschlüsselungsschlüssels, der mit der Ursprungs-BS assoziiert ist zum Senden und Empfangen von WLAN-Paketdateneinheiten bzw. WLAN-PDUs.

15. Eine Vorrichtung für eine Ursprungsweitverkehrsnetzwerkbasisstation bzw. Ursprungs-WWAN-BS (WWAN = wireless wide area network, BS = base station) (1204), zum Durchführen von Drahtloskommunikation, wobei die Vorrichtung Folgendes aufweist:
wenigstens einen Prozessor, der konfiguriert ist die BS zu veranlassen zum: Senden (902) einer Übergabe- bzw. HO-Anfrage (HO = handover) zum Übergeben einer Nutzereinrichtung bzw. UE (UE = user equipment) (1202) von der Ursprungs-BS (1204) an eine Ziel-WWAN-BS (1208); und
ansprechend auf Empfangen einer Bestätigung der HO-Anfrage von der Ziel-WWAN-BS, Ergreifen (904) von einer oder mehreren Maßnahmen zum Aufrechterhalten einer existierenden Verbindung zwischen der UE (1202) und einem WLAN-Zugriffspunkt bzw. WLAN-AP (AP = access point) (1206); und einen Speicher, der an den wenigstens einen Prozessor gekoppelt ist, wobei die Vorrichtung **dadurch gekennzeichnet ist, dass** der wenigstens eine Prozessor konfiguriert ist die BS zu veranlassen zum Senden, an die UE (1202) einer PDU, einer Sequenznummer bzw. SN (SN = sequence number), die mit einer letzten physischen Dateneinheit eines Paketdatenkonvergenzprotokolls bzw. PDCP-PDU (PDCP = packet data convergence protocol, PDU = physical data unit) assoziiert ist, die an den AP (1206) durch die Ursprungs-BS (1204) weitergeleitet wird.

## Revendications

1. Un procédé de communication sans fil exécuté par un équipement d'utilisateur, UE, (1202), le procédé comprenant :
la réception (1002) d'une indication de transfert, HO, à partir d'une station de base, BS, de réseau étendu sans fil, WWAN, source (1204) pour un transfert vers une BS WWAN cible (1208), et
en réponse à l'indication HO, l'exécution (1004) d'une ou de plusieurs actions de façon à maintenir une connexion existante entre l'UE (1202) et un point d'accès, AP, de réseau local sans fil, WLAN, (1206), le procédé étant **caractérisé en ce qu'**il comprend en outre :
la réception, à partir de la BS source (1204), d'un numéro de séquence, SN, associé à une dernière unité de données physique, PDU, de protocole de convergence de données en mode paquets, PDCP, transmise à l'AP (1206) par la BS source (1204), et **en ce que** l'exécution des une ou plusieurs actions comprend
l'utilisation d'une clé de déchiffrement associée à la BS source (1204) destinée au déchiffrement de PDU reçues possédant un SN inférieur au SN de la dernière PDU transmise à l'AP (1206) par la BS source (1204).

2. Le procédé selon la Revendication 1, où l'exécution des une ou plusieurs actions comprend :
l'utilisation d'une clé de chiffrement associée à la BS cible destinée au chiffrement de paquets pour une transmission UL après l'achèvement du HO vers la BS cible .

3. Le procédé selon la Revendication 1, où le SN associé à la dernière PDU PDCP est reçue dans un message de reconfiguration de connexion de commande de ressource radio, RRC.

4. Le procédé selon la Revendication 1, comprenant en outre :
la transmission d'un SN associé à une dernière PDU UL transmise par l'intermédiaire d'un WLAN à la BS cible.

5. Le procédé selon la Revendication 1, où l'UE est raccordé au WLAN par l'intermédiaire d'une BS qui gère une agrégation de WLAN.

6. Le procédé selon la Revendication 1, comprenant en outre :
avant la réception et le traitement de l'indication HO, l'utilisation d'une clé de chiffrement associée à la BS source pour la transmission et la réception d'unités de données en mode paquets, PDU, WLAN.

7. Un procédé de communication sans fil exécuté par une station de base, BS, de réseau étendu sans fil, WWAN, source (1204), le procédé comprenant :
la transmission (902) d'une demande de transfert, HO, destinée à un transfert par l'intermédiaire d'un équipement d'utilisateur, UE, à partir de la BS source (1204) vers une BS WWAN cible (1208), et
en réponse à la réception d'un accusé de réception de la demande HO à partir de la BS WWAN cible, l'exécution (904) d'une ou de plusieurs actions de façon à maintenir une connexion existante entre l'UE (1202) et un point d'accès, AP, WLAN (1206), le procédé étant **caractérisé en ce que** l'exécution des une ou plusieurs actions comprend :
la transmission, à l'UE (1202), d'un numéro de séquence, SN, associé à une dernière unité de données physique, PDU, de protocole de convergence de données en mode paquets, PDCP, transmise à l'AP (1206) par la BS source (1204).

8. Le procédé selon la Revendication 7, où la BS source gère la connexion de l'UE au WLAN.

9. Un appareil destiné à un équipement d'utilisateur, UE, (1202), de façon à exécuter une communication sans fil, l'appareil comprenant :
au moins un processeur configuré de façon à amener l'UE à :
recevoir (1002) une indication de transfert, HO, à partir d'une station de base, BS, de réseau étendu sans fil, WWAN, source (1204) pour un transfert vers une BS WWAN cible (1208), et
en réponse à l'indication HO, exécuter (1004) une ou plusieurs actions de façon à maintenir une connexion existante entre l'UE (1204) et un point d'accès, AP, (1206) de réseau local sans fil, WLAN, et
une mémoire couplée au au moins un processeur, l'appareil étant **caractérisé en ce que** le au moins un processeur est configuré de façon à amener l'UE à :
recevoir, à partir de la BS source (1204), un numéro de séquence, SN, associé à une dernière unité de données physique, PDU, de protocole de convergence de données en mode paquets, PDCP, transmise PDUs à l'AP (1206) par la BS source (1204), et
utiliser une clé de déchiffrement associée à la BS source (1204) pour le déchiffrement de PDU reçues possédant un SN inférieur au SN de la dernière PDU transmise à l'AP (1206) par la BS source (1204).

10. L'appareil selon la Revendication 9, où le au moins un processeur configuré de façon à amener l'UE à exécuter les une ou plusieurs actions est configuré de façon à amener l'UE à utiliser une clé de chiffrement associée à la BS cible pour la transmission WLAN UL.

11. L'appareil selon la Revendication 9, où le au moins un processeur configuré de façon à amener l'UE à exécuter les une ou plusieurs actions est configuré de façon à amener l'UE à utiliser, au cours du HO, une clé de chiffrement associée à la BS source pour des données transmises par l'intermédiaire du WLAN.

12. L'appareil selon la Revendication 9, où le au moins un processeur configuré de façon à amener l'UE à exécuter les une ou plusieurs actions est configuré de façon à amener l'UE à :
transmettre une unité de données physique, PDU, à la BS cible, où la PDU indique la dernière PDU chiffrée transmise au moyen d'une clé associée à la BS source, et
après la transmission par le au moins un processeur de la PDU à la BS cible, le au moins un processeur est configuré de façon à transmettre des PDU WLAN au moyen d'une clé de chiffrement associée à la BS cible.

13. L'appareil selon la Revendication 9, où l'UE est raccordé au WLAN par l'intermédiaire d'une BS qui gère une agrégation de WLAN.

14. L'appareil selon la Revendication 9, où le au moins un processeur est configuré de façon à amener l'UE à :
avant la réception et le traitement de l'indication HO, utiliser une clé de chiffrement associée à la BS source pour la transmission et la réception d'unités de données en mode paquets, PDU, WLAN.

15. Un appareil destiné à une station de base, BS, de réseau étendu sans fil, WWAN, source (1204), de façon à exécuter une communication sans fil, l'appareil comprenant :
au moins un processeur configuré de façon à amener la BS à :
transmettre (902) une demande de transfert, HO, destinée à un transfert par l'intermédiaire d'un équipement d'utilisateur, UE, (1202) à partir de la BS source (1204) vers une BS WWAN cible (1208), et
en réponse à la réception d'un accusé de réception de la demande HO à partir de la BS WWAN cible, exécuter (904) une ou plusieurs actions de façon à maintenir une connexion existante entre l'UE (1202) et un point d'accès, AP (1206) WLAN, et
une mémoire couplée au au moins un processeur, l'appareil étant **caractérisé en ce que** le au moins un processeur est configuré de façon à amener la BS à transmettre une PDU à l'UE (1202), un numéro de séquence, SN, associée à une dernière unité de données physique, PDU, de protocole de convergence de données en mode paquets, PDCP, transmise à l'AP (1206) par la BS source (1204).
